# EUROPÄISCHE PATENTSCHRIFT

(11) **EP 3 531 875 B1**
(45) Veröffentlichungstag und Bekanntmachung des Hinweises auf die Patenterteilung: **05.08.2020**
(21) Anmeldenummer: 17797064.7
(22) Anmeldetag: 20.10.2017
(51) Int. Cl.: A47C 27/20

(54) **FEDERELEMENT, FEDER UND MATRATZE**
SPRING ELEMENT, SPRING AND MATTRESS
ÉLÉMENT RESSORT, RESSORT ET MATELAS

(30) Priorität: 25.10.2016 AT 509792016
(43) Veröffentlichungstag der Anmeldung: 04.09.2019
(73) Patentinhaber: Bretis, Wilhelm, 9433 St. Andrä (AT)
(72) Erfinder: Bretis, Wilhelm, 9433 St. Andrä (AT)
(74) Vertreter: TBK
(86) Internationale Anmeldenummer: PCT/EP2017/076833
(87) Internationale Veröffentlichungsnummer: WO 2018/077741

(56) Entgegenhaltungen:
- EP-A2- 1 602 303
- EP-A2- 2 116 152
- WO-A2-2009/133086
- DE-U1- 20 202 050

## Beschreibung

Die Erfindung betrifft ein Federelement gemäß dem Oberbegriff des Anspruchs 1, eine Feder mit einem solchen Federelement und eine Matratze für Liege- und Sitzeinrichtungen mit einer solchen Feder. Die Merkmale des Oberbegriffs des Anspruchs 1 sind aus der Druckschrift DE 202 02 050 U1 bekannt.

Die Druckschrift EP 2 116 152 B1 offenbart einen Matratzenkörper aus Schaumstoff oder Latex. In dem Matratzenkörper sind Hohlräume vorgesehen, in die stabförmige Federn eingebracht werden. Die Federn sind aus einem Kunststoffmaterial ausgebildet und bestehen aus einem Mittelsteg und damit geformten Federelementen. Die Federelemente weisen im Wesentlichen eine Form einer abgeflachten Ellipse auf.

Aufgrund der Größe der Feder, deren Länge in etwa der Breite einer Matratze entspricht, sind bei Verwendung von Kunststoff als Material vergleichsweise große und daher teure Gussformen erforderlich. Ein Anpassen der Federn an individuelle Nutzerbedürfnisse hinsichtlich einer härteren oder weicheren Federung ist nur durch Verwendung einer entsprechend geänderten Gussform möglich, mit der demzufolge vergleichsweise härtere oder weichere Federn erzeugt werden können. Bei Bruch eines einzelnen Federelements kann dieses nur ersetzt werden, indem die vollständige Feder ausgetauscht wird.

Es besteht daher Bedarf an einem Federelement und einer Feder insbesondere für eine Matratze einer Liege- oder Sitzeinrichtung, die eine erhöhte Flexibilität, insbesondere hinsichtlich einer Einstellungsmöglichkeit von Weichheit oder Härte der Matratze, für einen Benutzer ermöglicht. Es ist die Aufgabe der Erfindung, ein solches Federelement und eine Feder mit einem solchen Federelement bereitzustellen.

Die Aufgabe der Erfindung wird durch ein Federelement gemäß Anspruch 1 gelöst. Vorteilhafte Ausführungsformen werden gemäß den abhängigen Ansprüchen ausgeführt.

Ein erfindungsgemäßes Federelement weist ein aus zwei Manschetten ausgebildetes Manschettenpaar auf. Jede Manschette des Manschettenpaares ist aus einem geschlossenen Band ausgebildet. Die zwei Manschetten sind mittels eines Verbindungsstücks an jeweils einer Stelle ihres Umfangs einander gegenüberliegend miteinander verbunden. An jeder Manschette ist von dem Verbindungsstück beabstandet ein zu der gegenüberliegenden Manschette hin gerichteter Vorsprung vorgesehen. Dadurch ist zwischen den Manschetten ein durch das Verbindungsstück und die Vorsprünge definierter Aufnahmeraum ausgebildet.

Die Bereitstellung einzelner Federelemente ermöglicht die Verwendung von wesentlich kleineren Gussformen als für die voranstehend beschriebene Feder gemäß dem Stand der Technik (EP 2 116 152 B1). Durch Aufschieben der Federelemente auf einen Mittelsteg, der dabei in dem Aufnahmeraum aufgenommen wird, können Federn mit beliebig einstellbarer Härte geschaffen werden. Die Härte kann dabei durch Variieren der Abstände benachbarter Federelemente angepasst werden.

In einem solchen Federelement weist jede Manschette einen angenähert elliptischen Querschnitt auf, der im Bereich des Verbindungsstücks abgeflacht ist. Außerdem ist jeder Vorsprung keilförmig ausgebildet. Dadurch weist der Aufnahmeraum einen angenähert rechteckigen Querschnitt auf.

Der angenähert elliptische Querschnitt hat sich hinsichtlich Festigkeit und Elastizität als vorteilhaft erwiesen. Die keilförmige Ausbildung der Vorsprünge ermöglicht es, während des Aufschiebens des Federelements auf einen Mittelsteg, den Aufnahmeraum durch Auseinanderschieben der beiden Vorsprünge gleichmäßig zu öffnen. Dabei kann ein zu weites Öffnen des Aufnahmeraums ausgeschlossen werden, was eventuell zu einer Schädigung oder gar Zerstörung des Federelements

führen kann. Zwischen den beiden jeweils zu der gegenüberliegenden Manschette hin gerichteten Vorsprüngen ist ein Abstand vorhanden. Dadurch kann das Federelement auf den Mittelsteg aufgeschoben werden.

Erfindungsgemäß hat eine Feder einen stabförmigen Mittelsteg und ein Federelement, wie es voranstehend beschrieben wurde. Das Federelement ist dabei derart auf den Mittelsteg aufgeschoben, dass ein Abschnitt des Mittelstegs in dem Aufnahmeraum des Federelements aufgenommen ist und auch wieder zerstörungsfrei aus dem Aufnahmeraum des Federelements entfernbar ist.

Da der Mittelsteg wieder aus dem Aufnahmeraum entfernt werden kann, ohne dass dabei eine Schädigung des Mittelstegs oder des Federelements auftritt, kann das Federelement beliebig auf dem Mittelsteg montiert werden. Dadurch kann vorteilhaft die Weichheit bzw. die Härte einer Matratze angepasst werden, in welche die Feder eingebaut wird. Außerdem kann auch nach Auslieferung der Matratze die Weichheit bzw. die Härte der Matratze durch den Benutzer (Kunden) selbst angepasst werden. Hierzu muss lediglich die Feder aus der Matratze entnommen und ein oder mehrere Federelemente vom Mittelsteg entfernt, hinzugefügt oder umgesteckt werden.

Es sei noch darauf hingewiesen, dass aus Gründen der Praktikabilität üblicherweise das Federelement auf den Mittelsteg aufgeschoben bzw. von diesem abgenommen wird. Dabei kann der Mittelsteg in einer geeigneten Einspannvorrichtung fixiert sein. Üblicherweise ist nämlich der Mittelsteg mit einer Mehrzahl von Federelementen versehen. Grundsätzlich ist aber auch ein Einbringen oder Entfernen des Mittelstegs in den Aufnahmeraum eines stationär festgehaltenen Federelements oder daraus heraus möglich.

Vorteilhaft kann der Aufnahmeraum durch ein Zusammendrücken der beiden Manschetten an einem von dem Aufnahmeraum abgewandten Abschnitt des Federelements in dem Bereich der Vorsprünge aufgeweitet werden. Dadurch kann das Federelement auf den Mittelsteg aufgeschoben oder davon abgenommen werden.

Somit kann dieser Aufschiebe-/Abnahmevorgang des Federelements auf den Mittelsteg bzw. dieser Einbringungs-/Entnahmevorgang des Mittelstegs in/aus dem Aufnahmeraum des Federelements in materialschonender Weise durchgeführt werden, ohne dass Gefahr besteht, durch eine Überbeanspruchung des Materials des Federelements oder des Mittelstegs eine Schädigung herbeizuführen, die zu einem Materialversagen führen kann.

Vorteilhaft kann der stabförmige Mittelsteg einen rechteckigen Querschnitt aufweisen.

Durch die rechteckige Querschnittsform kann der Mittelsteg mit gleichmäßigem Kraftaufwand in den Aufnahmeraum eingeschoben werden, was die Herstellung einer Feder erleichtert.

Außerdem kann der stabförmige Mittelsteg entlang seiner Längsachse angeordnete, zueinander gleichmäßig beabstandete sprossenartige Vorsprünge aufweisen. Diese sprossenartigen Vorsprünge können bevorzugt paarweise ausgebildet sein. Besonders vorteilhaft kann ein Abstand zwischen den sprossenartigen Vorsprüngen einer Breite des die Manschetten ausbildenden Bandes entsprechen.

Die sprossenartigen Vorsprünge können mit dem auf den Mittelsteg aufgeschobenen Federelement in Anlage geraten, sodass eine seitliche Verschiebung des Federelements entlang des Mittelstegs (entlang der Mittelachse des Mittelstegs) unterbleibt. Daher kann mit dieser Ausgestaltung verhindert werden, dass sich ein oder mehrere Federelemente während des Einbaus der Feder in die Matratze oder während der Verwendung verschieben, wodurch die eingestellte Weichheit bzw. Härte der Matratze beeinträchtigt wäre.

Vorteilhaft sind die sprossenartigen Vorsprünge paarweise ausgebildet. Es kann außerdem zwischen benachbarten Paaren der sprossenartigen Vorsprünge ein Abstand entsprechend der Breite des die Manschetten ausbildenden Bandes vorliegen. Außerdem kann zwischen den einzelnen sprossenartigen Vorsprüngen eines Paares ein Paarabstand vorliegen.

Durch diese Ausgestaltung ist es möglich, das Federelement mittels Formschluss eindeutig zu positionieren, ohne dass die Gefahr einer Verschiebung des Federelements besteht. Aufgrund des Paarabstandes ist zwischen benachbarten Federelementen immer ein Mindestabstand in Form des Paarabstandes und der Breite der beiden Sprossen sichergestellt. Dadurch kann bei einem Biegen der Feder z.B. durch einen auf der Matratze liegenden oder sitzenden Benutzer sichergestellt werden, dass benachbarte Federelemente nicht aneinander geraten oder aneinander reiben und dadurch Schäden entstehen.

Vorteilhaft können ein sprossenartiger Vorsprung oder ein Paar sprossenartige Vorsprünge so an jedem Ende des stabförmigen Mittelstegs vorgesehen sein, dass an beiden Seiten des stabförmigen Mittelstegs eine stufenfreie Endfläche ausgebildet ist.

Dabei kann außerdem vorteilhaft der stabförmige Mittelsteg an einem seiner Enden mittels eines Verbindungselements mit einem zweiten stabförmigen Mittelsteg verbunden sein.

Entsprechend ist es möglich, Mittelstege in einer bestimmten Länge zu fertigen und bei Bedarf zwei Mittelstege zu verbinden. Dadurch können Federn in jeder beliebigen Länge hergestellt werden.

Vorteilhaft kann das Verbindungselement zwei miteinander verbundene Kieferelemente aufweisen, die durch ein Zusammendrücken an einem Ende an dem gegenüberliegenden Ende zur Aufnahme und Entnahme der Mittelstege aufgeweitet werden können.

Ähnlich wie im Fall des Aufnahmeraums kann durch diese Ausgestaltung ein materialschonendes Anbringen des Verbindungselements an den zu verbindenden Mittelstegen erfolgen.

Vorteilhaft kann das Verbindungselement zwei mit einem Schlitz versehene, einander gegenüberliegende Wände aufweisen, zwischen denen in einem verbundenen Zustand die sprossenartigen Vorsprünge an der stufenfreien Endfläche der beiden Mittelstege aufgenommen sind. Dabei ist jeweils einer der stabförmigen Mittelstege in einem der Schlitze aufgenommen.

Ebenfalls kann vorteilhaft eine Dicke der einander gegenüberliegenden Wände dem Paarabstand zwischen den einzelnen Sprossen des Paares sprossenartige Vorsprünge an dem Ende des stabförmigen Mittelstegs entsprechen. In dem verbundenen Zustand befindet sich dabei jede Wand des Verbindungselements zwischen den einzelnen Sprossen des Paares sprossenartige Vorsprünge.

Bei dieser Ausgestaltung werden die Mittelstege mittels Formschluss in die Schlitze der Wände des Verbindungselements aufgenommen. Jede Wand des Verbindungselements ist nämlich an jeder Seite mit je einem sprossenartigen Vorsprung eines Paares sprossenartiger Vorsprünge in Anlage, während der Mittelsteg in dem Schlitz liegend an jeder Seite mit der Wand des Verbindungselements in Anlage ist. Es ist daher nicht erforderlich, die Längen bzw. die Form der Enden der Mittelstege exakt so aufeinander abzustimmen, dass sie zur Verbindung genau miteinander in Anlage sind. Daher ist es möglich, im Zuge einer Fertigung, die Mittelstege einfach abzulängen, ohne dass dabei eine exakte Maßhaltigkeit erforderlich ist.

Vorteilhaft kann an einem offenen Ende jedes Schlitzes mindestens ein Vorsprung vorgesehen sein, der den Schlitz in der Form des Querschnitts des Mittelstegs begrenzt.

Dadurch ist ein unbeabsichtigtes Entfernen des Verbindungselements verhindert.

In einer erfindungsgemäßen Feder können mehrere Manschettenpaare vorgesehen sein, die derart auf den Mittelsteg aufgeschoben sind, dass der Mittelsteg in den Aufnahmeräumen der Manschettenpaare aufgenommen ist, sodass die Manschettenpaare parallel zueinander liegend entlang des Mittelstegs angeordnet sind.

Dabei ist es allerdings nicht erforderlich, dass jeder Zwischenraum zwischen zwei benachbarten sprossenartigen Vorsprüngen (im Folgenden Zwischenraum) mit einem Federelement bestückt ist, was eine Feder maximaler Härte ergeben würde. In vorteilhafter Weise können die Federelemente beispielsweise in jedem zweiten Zwischenraum, in jedem dritten Zwischenraum usw. angeordnet sein, wodurch immer weichere Matratzen ausgebildet werden können. Besonders vorteilhaft ist es aber, die Feder im Randbereich der Matratze derart auszubilden, dass z.B. in den ersten drei bis fünf direkt benachbarten Zwischenräumen des Mittelstegs Federelemente vorgesehen sind, während in dem mittleren Bereich nur jeder zweite, dritte usw. Zwischenraum mit einem Federelement versehen ist. Die erfindungsgemäße Feder ermöglicht somit, die Weichheit bzw. Härte der Matratze durch Variieren der Abstände zwischen benachbarten Federelementen einzustellen.

Eine erfindungsgemäße Matratze für Liege- und/oder Sitzeinrichtungen weist einen Matratzenkörper aus einem in sich bewegbaren Werkstoff, insbesondere aus Schaumstoff oder Latex, mit quer zu einer Längsachse oder Breitenachse angeordneten Hohlräumen auf. Dabei ist in mindestens einem Hohlraum eine Feder vorgesehen, wie sie voranstehend beschrieben wurde.

Eine derartige Matratze ist insbesondere geeignet für Betten, Schiffskojen, Sofas, Schlafsofas, als Sitzfläche oder Rückenlehne für Fahrzeugsitze wie z.B. KFZ-Sitze, LKW-Sitze, Schienenfahrzeugsitze, Flugzeugsitze usw. Diese Aufzählung ist lediglich als beispielhaft und nicht als abschließend zu verstehen. Aufgrund der einzelnen Ausgestaltung der Federelemente können nämlich auf einfache Weise Federn in beliebiger Größe und Stärke für die unterschiedlichsten Arten von Matratzen auch im Sinn von Sitzflächen oder Rückenlehnen für diverse Sitze gefertigt werden.

Ein erfindungsgemäßes Verfahren zur Herstellung einer Matratze für Liege- und/oder Sitzeinrichtungen mit einem Matratzenkörper aus einem in sich bewegbaren Werkstoff, insbesondere aus Schaumstoff oder Latex, mit quer zu einer Längsachse oder Breitenachse angeordneten Hohlräumen hat die Schritte: Herstellen einer Feder durch Aufschieben von Federelementen auf einen Mittelsteg; Ansetzen eines Trichters, dessen Querschnittsform dem Umriss der Feder entspricht an einen Hohlraum, und Einbringen der Feder in den Hohlraum mittels Aufbringen von Druck oder mittels einem durch den Hohlraum geführten, mit dem Mittelsteg verbundenen Zugteil, wobei zur Verbindung des Mittelstegs mit dem Zugteil ein Verbindungselement vorgesehen ist, das zwei miteinander verbundene Kieferelemente aufweist, die durch ein Zusammendrücken an einem Ende an dem gegenüberliegenden Ende zur Aufnahme und Entnahme des Mittelstegs aufgeweitet werden können.

Während die voranstehend beschriebenen Elemente (insbesondere die Federelemente, die Mittelstege, die Verbindungselemente) bevorzugt aus Kunststoff gefertigt werden, sei darauf hingewiesen, dass grundsätzlich auch andere Werkstoffe, wie z.B. Metall (Federstahl) oder Holz (Sperrholz), zur Herstellung von erfindungsgemäßen Federn oder einzelner Elemente davon verwendet werden können.

Eine derzeit bevorzugte Ausführungsform der Erfindung wird auf Grundlange der anhängenden Figuren beschrieben, in denen
Fig. 1 eine perspektivische Ansicht eines erfindungsgemäßen Federelements ist;
Fig. 2 eine erfindungsgemäße Feder mit einem an einem Mittelsteg angebrachten Federelement zeigt;
Fig. 3 eine Verbindung zweier Mittelstege mittels eines Verbindungselements zeigt;
Fig. 4 eine Detailansicht eines erfindungsgemäßen Verbindungselements ist;
Fig. 5 eine Ansicht einer erfindungsgemäßen Feder gemäß eines Beispiels ist;
Fig. 6 eine Ansicht einer erfindungsgemäßen Feder gemäß eines zweiten Beispiels ist;
Fig. 7 eine Ansicht einer erfindungsgemäßen Feder gemäß eines dritten Beispiels ist;
Fig. 8 eine Vorderansicht einer erfindungsgemäßen Feder ist; und
Fig. 9 eine Ansicht eines Trichters zum erfindungsgemäßen Einbringen von Federn in eine Matratze ist.

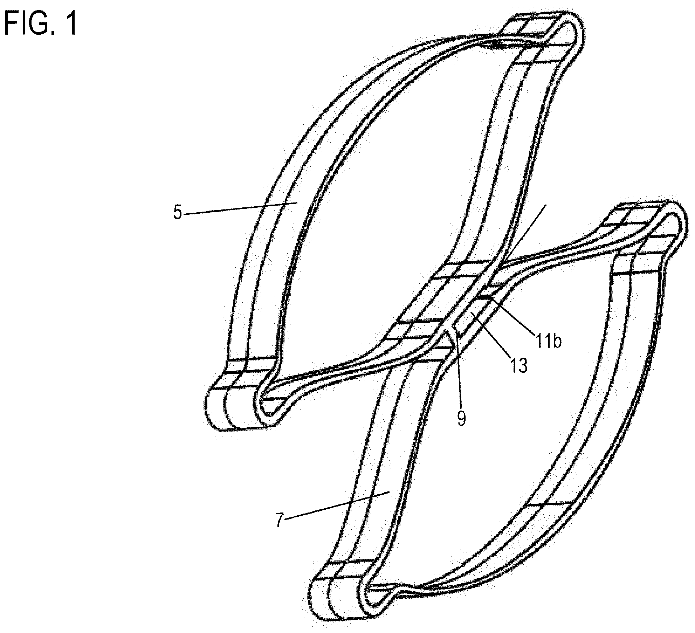

Fig. 1 zeigt ein Beispiel eines erfindungsgemäßen Federelements 1. Das Federelement besteht aus einem Paar Manschetten 5, 7 die jeweils aus einem ringförmigen Kunstoffband in Form einer an einer Seite abgeflachten Ellipse ausgebildet sind. Die abgeflachten Seiten der Manschetten 5, 7 sind einander zugewandt und an einer Stelle mittels einem Verbindungssteg (erfindungsgemäßes Verbindungsstück) 9 miteinander verbunden. Außerdem befinden sich an jeder Manschette 5, 7 in dem abgeflachten Bereich der jeweils anderen Manschette 7, 5 zugewandte, keilförmige Vorsprünge 11a, 11b. Diese keilförmigen Vorsprünge 11a, 11b definieren zusammen mit dem Verbindungssteg 9 und dem dazwischen liegenden abgeflachten Bereich der Manschetten 5, 7 einen Aufnahmeraum 13.

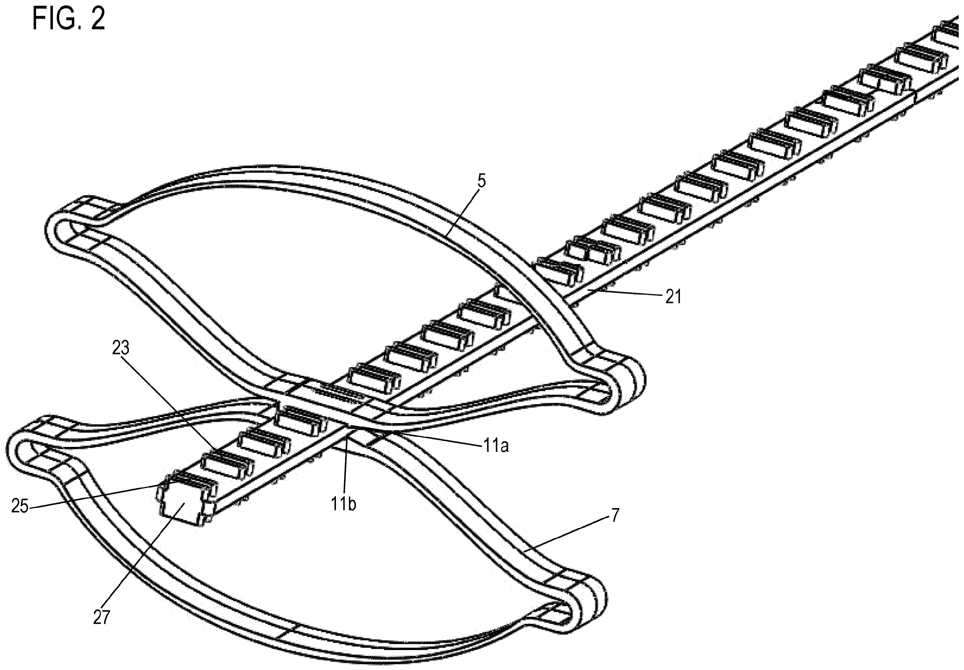

Der Aufnahmeraum 13 dient zum Aufnehmen eines stabförmigen Mittelstegs 21, wie aus Fig. 2 beispielhaft ersichtlich ist. Dazu wird das Federelement 1 derart auf den Mittelsteg 21 geschoben, dass dieser in den Bereich zwischen den keilförmigen Vorsprüngen 11a, 11b eingeführt wird. Aufgrund der schrägen Keilflächen werden dabei die Vorsprünge 11a, 11b so gespreizt, dass der Mittelsteg 21 mittels Formschluss in den Aufnahmeraum 13 aufgenommen werden kann.

Durch ein Zusammendrücken der beiden Manschetten 5, 7 an einer von dem Aufnahmeraum 13 abgewandten Stelle, können die beiden Vorsprünge 11a, 11b wieder so weit auseinander bewegt werden, dass es möglich ist, den Mittelsteg 21 wieder aus dem Aufnahmeraum 13 zu entnehmen. Bevorzugt erfolgt dies durch ein Abnehmen des Federelements 1 von dem Mittelsteg.

Diese beiden beschriebenen Vorgänge können in für das Material schonender Weise ausgeführt werden, sodass eine möglicherweise zu einem Versagen führende Schwächung des Materials unterbleibt.

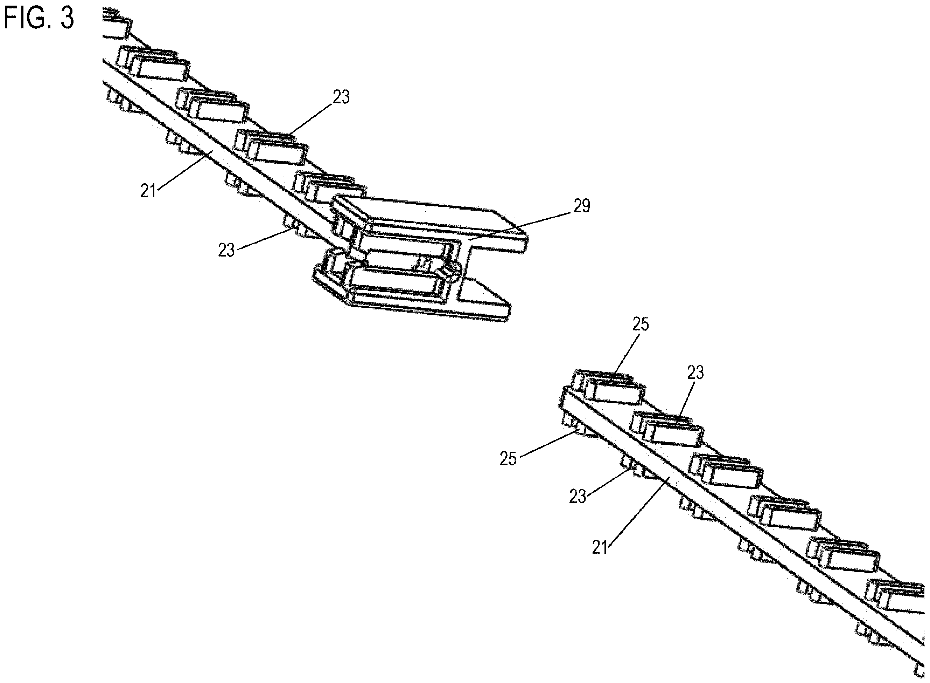

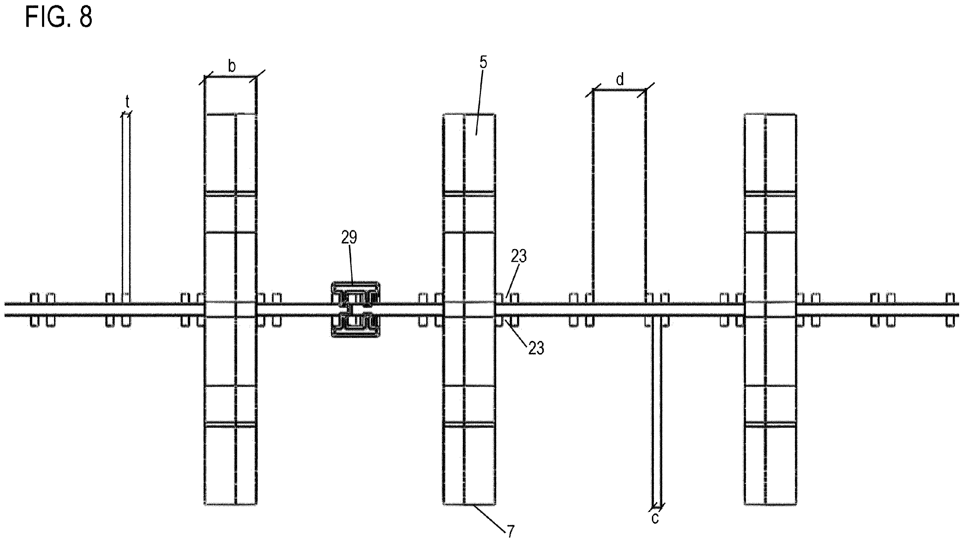

Wie ebenfalls aus z.B. Fig. 2 oder Fig. 3 ersichtlich ist, weist der Mittelsteg 21 sprossenartige Vorsprünge 23 auf, die paarweise an beiden Seiten des Mittelstegs 21 angeordnet sind. Aus Fig. 8 können Abmessungen des Mittelstegs 21, der sprossenartigen Vorsprünge und des Federelements 1 entnommen werden. So beträgt ein Abstand zwischen zwei benachbarten Paaren sprossenartiger Vorsprünge "d", was einer Breite "b" des Federelements entspricht. Der Abstand zwischen den einzelnen Sprossen eines Paares der sprossenartigen Vorsprünge 23 beträgt "c" und die Dicke einer einzelnen Sprosse beträgt "t". An den Enden weist der Mittelsteg je ein Paar benachbarter sprossenartige Vorsprünge 25 auf, deren Abmessungen und Abstände denen der sprossenartigen Vorsprünge 23 entsprechen. Der äußerste sprossenartige Vorsprung 25 befindet sich direkt am Rand des Mittelstegs 21, sodass eine plane Endfläche 27 geschaffen ist.

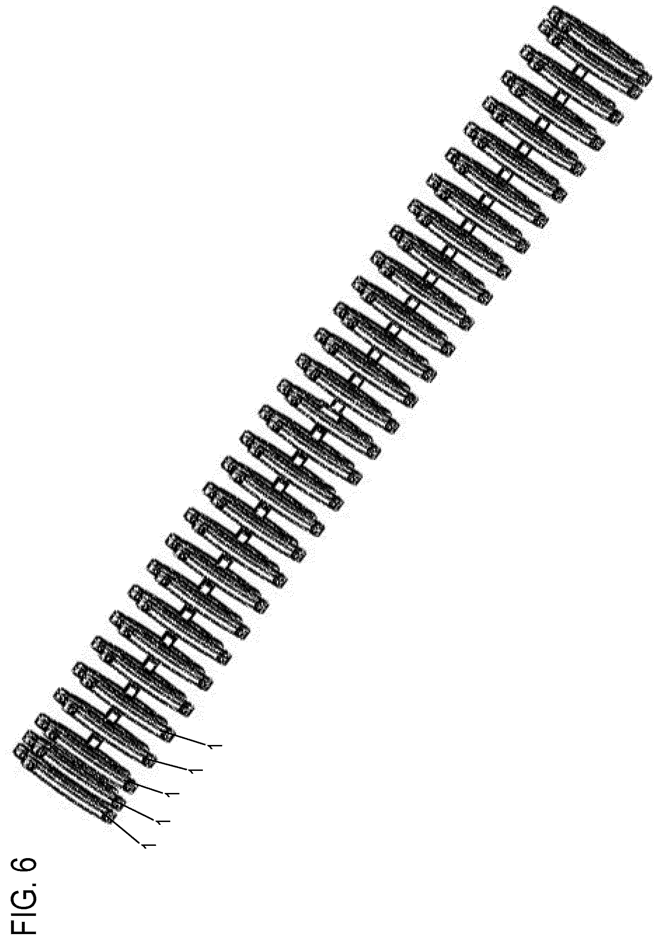

Aufgrund dieser Abstandsverhältnisse ist es möglich, je ein Federelement 1 in den Zwischenraum zwischen zwei benachbarten Paaren der sprossenartigen Vorsprünge 23 einzufügen, wodurch eine Feder maximaler Härte entsteht. Ebenfalls ist es möglich, lediglich an den Enden der Feder entsprechend einem Randbereich der Matratze, in die die Feder einzubringen ist, Federelemente 1 in direkter Nachbarschaft anzuordnen, während in einem mittleren Bereich der Feder lediglich jeder zweite Zwischenraum zwischen zwei benachbarten Paaren der sprossenartigen Vorsprünge 23 mit einem Federelement 1 versehen ist. Eine derartige Feder ist beispielhaft in Fig. 6 dargestellt. Es sei darauf hingewiesen, dass aus Gründen der Vereinfachung nicht jedes einzelne Federelement 1 mit einem Bezugszeichen versehen ist. Ebenso sind die sprossenartigen Vorsprünge 23 nicht durchgehend mit Bezugszeichen versehen.

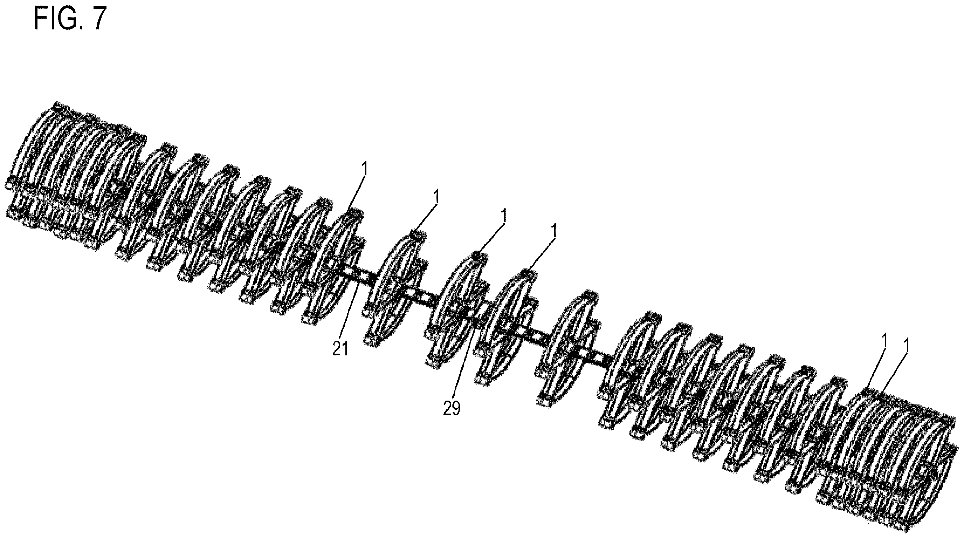

Wie aus der voranstehenden Beschreibung ersichtlich wird, sind beliebige Anordnungen der Federelemente 1 auf dem Mittelsteg 21 möglich. Anstelle der in Fig. 6 gezeigten und voranstehend beschriebenen Anordnung ist beispielsweise eine Anordnung wie die in Fig. 7 gezeigte möglich. Gemäß Fig. 7 werden die Abstände zwischen den Federelementen 1 von den Enden der Feder nach innen in drei Zonen immer größer. So sind an den Enden der Feder die Federelemente 1 direkt benachbart angeordnet. In an die Endbereiche anschließenden ersten Mittelbereichen ist jeweils ein Zwischenraum zwischen zwei benachbarten Paaren der sprossenartigen Vorsprünge 23 freigelassen, während in einem zweiten, an den ersten Mittelbereich anschließenden Mittelbereich drei Zwischenräume zwischen zwei benachbarten Paaren der sprossenartigen Vorsprünge 23 freigelassen sind. Dadurch weist eine mit dieser Feder versehene Matratze am Rand eine maximal erreichbare Härte auf, ist anschließend an den Rand etwas weicher ausgebildet, und ist in der Mitte nochmals weicher ausgebildet.

Die Mittelstege 21 können grundsätzlich in beliebiger Länge gefertigt werden. Allerdings hat es sich als produktionstechnisch vorteilhaft erwiesen, die Mittelstege in einer Standardlänge zu fertigen und Sondergrößen durch Anpassungen herzustellen.

Falls ein kürzerer Mittelsteg 21 benötigt wird, weil die Matratze einen sich verjüngenden Umriss aufweist, wie dies z.B. im Fall einer Matratze für eine Schiffskoje oder einen Wohnwagen, Wohnmobil usw. erforderlich sein kann, ist es möglich, den Mittelsteg 21 einfach durch Abschneiden, Abzwicken etc. zu verkürzen.

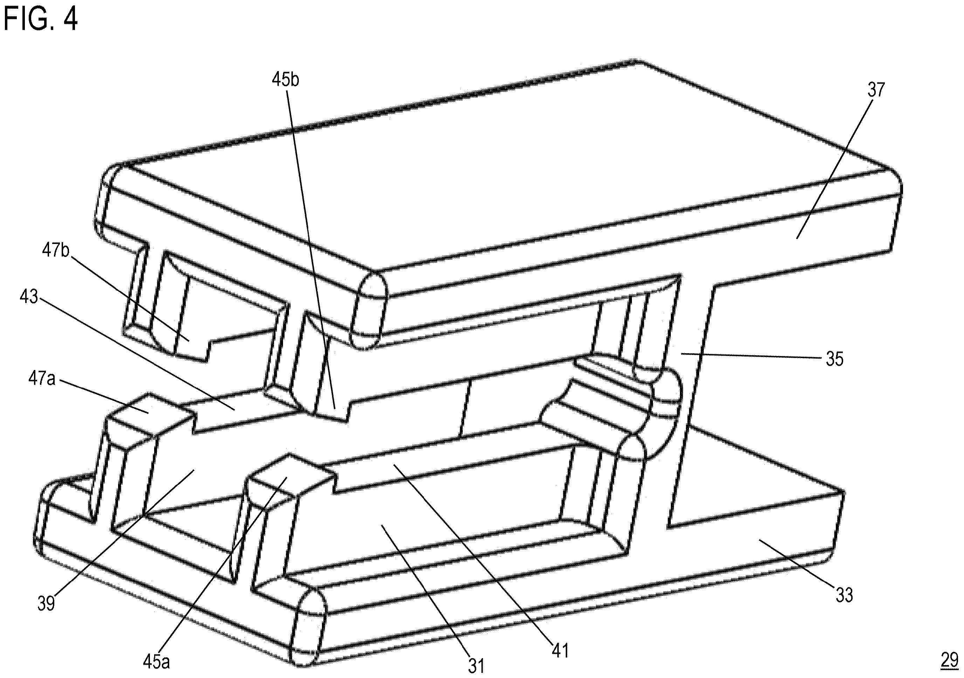

Eine Verlängerung des Mittelstegs 21 ist aber ebenfalls möglich. Dies erfolgt erfindungsgemäß mit einer Verbindungsklammer (entspricht einem erfindungsgemäßen Verbindungselement) 29, die aus Fig. 4 ersichtlich ist. Die Verbindungsklammer 9 weist zwei Kiefer 33 und 37 auf, die mittels einer Verbindungswand 35 verbunden sind. Ausgehend von der Verbindungswand 35 sind zu einem Ende hin zwei je mit einem Schlitz 41, 43 versehene Wände 31, 39 angeordnet, an deren von der Verbindungswand abgewandten Enden sich keilförmige Vorsprünge 45a, 47a, 45b und 47b befinden. Somit definiert jede Wand 31, 39 mittels der Schlitze 41, 43 und der Vorsprünge 45a, 47a, 45b und 47b einen Raum zum Aufnehmen des Mittelstegs 21. Da außerdem die Wanddicke der Wände 31, 39 dem Abstand "t" zwischen den einzelnen sprossenartigen Vorsprüngen 25 entspricht, ist jeder der zwei Mittelstege 21 mittels Formschluss unverrückbar fixiert. Der Abstand (W) zwischen den beiden Wänden 31, 39 entspricht dabei der Summe der Breite "d" der Zwischenräume und 2 × der Dicke "t" eines einzelnen sprossenartigen Vorsprungs (Wandabstand = 2 × t). Fig. 3 stellt einen Zustand dar, in dem eine Verbindungsklammer 29 bereits an einem Mittelsteg 21 montiert ist, während der zweite Mittelsteg 21 noch nicht montiert ist.

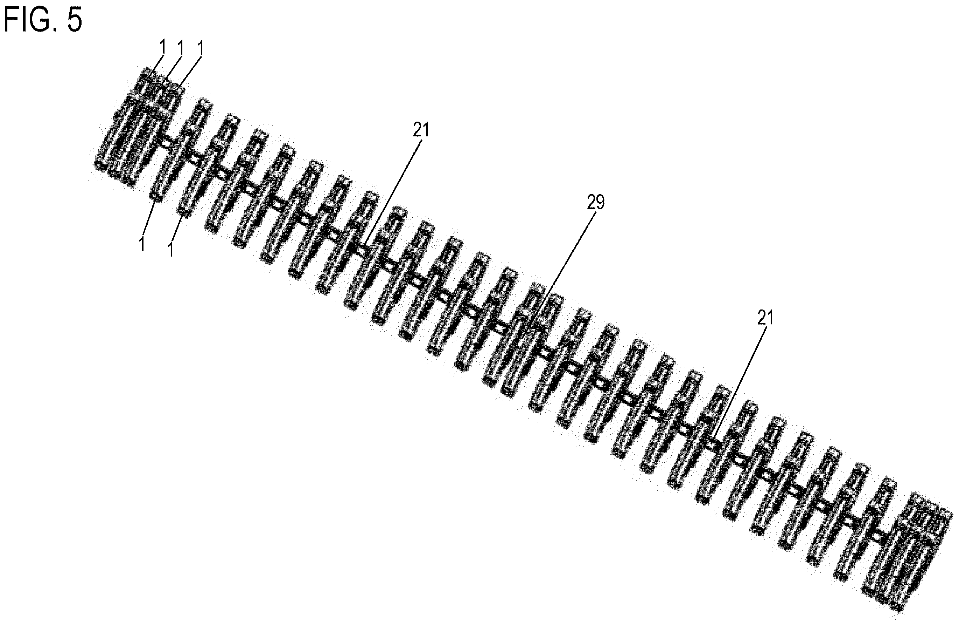

Somit ist es möglich, in ökonomischer Weise Verbindungsstege in beliebiger Länge zu schaffen. Fig. 5, Fig. 7 und Fig. 8 zeigen beispielhaft Federn mit entsprechend verlängerten Mittelstegen 21.

Ein großer Vorteil der erfindungsgemäßen Feder ist die Möglichkeit, die Härte der Matratze auch nach Auslieferung durch den Nutzer selbst anzupassen. Hierzu ist es lediglich erforderlich, nach Entfernen des Matratzenbezugs die Feder aus der Matratze heraus zu ziehen, zusätzliche Federelemente 1 anzubringen oder vorhandene Federelemente 1 zu entfernen und die Feder wieder in den Hohlraum in der Matratze einzubringen.

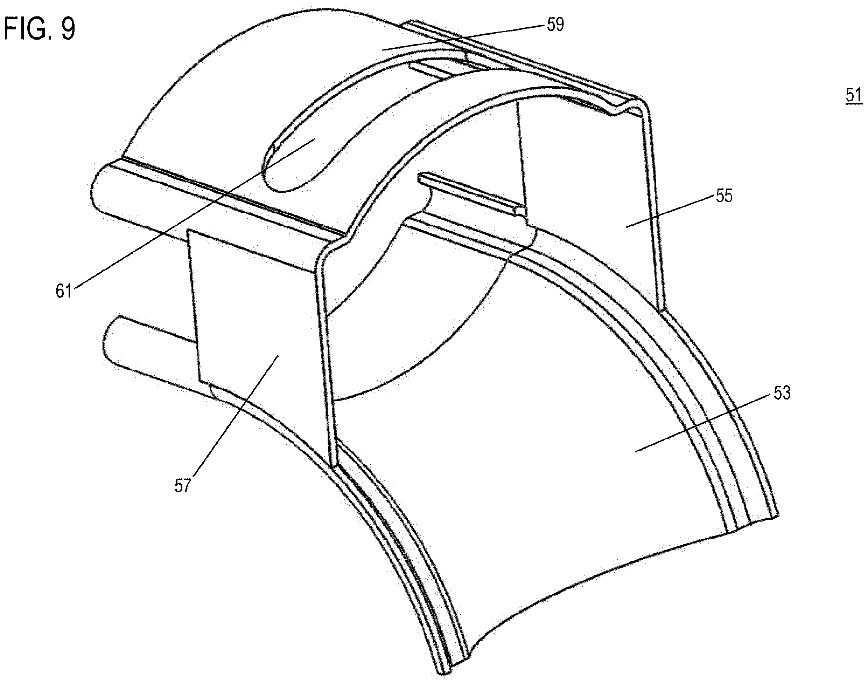

Hierzu ist ein Trichter 51 vorgesehen, der aus Fig. 9 ersichtlich ist. Der Trichter weist ein in Form einer Rutsche ausgebildetes Einführteil 53, zwei Wände 55 und 57 und ein Deckelteil 59 auf. Durch diese Elemente ist eine Öffnung ausgebildet, die im Wesentlichen einer Umrisslinie der Feder entspricht. Durch das Einschieben von proximalen Abschnitten des Deckel- 59 und Einführteils 51 in den Hohlraum der Matratze, kann die Feder in einfacher Weise mittels leichtem Druck wieder in die Matratze eingebracht werden, ohne dass es zu Verschiebungen oder Auffaltungen des Matratzenwerkstoffs (Schaumstoff oder Latex) kommt, die ein Einführen der Feder in die Matratze erschweren. Sobald die Feder in die Matratze eingebracht ist, kann der Trichter 51 einfach durch Eingreifen in eine in dem Deckelteil vorgesehene Grifföffnung 61 wieder von der Matratze getrennt werden.

Somit kann ein Nutzer nach Belieben, z.B. bei einer merkbaren Gewichtszunahme oder -Abnahme seine bereits vorhandene Matratze hinsichtlich der Härte anpassen, ohne dass es erforderlich ist, eine neue Matratze zu erwerben. Ebenfalls können unterschiedliche Zonen der Matratze wie z.B. die Kopfzone, die Schulterzone, die Beckenzone usw. mit unterschiedlichen Härten eingestellt werden.

Anstelle die Feder in die Matratze zu drücken, ist es auch möglich, diese mittels eines mit dem Mittelsteg 21 zu verbindenden Zugteils durch die Matratze durchzuziehen. Auch bei dieser Art der Federmontage kann der beschriebene Trichter 51 für eine wesentliche Erleichterung sorgen.

Die Erfindung wurde anhand von einer derzeit bevorzugten Ausführungsform und verschiedenen Beispielen beschrieben. Allerdings ist der Schutzbereich in keinster Weise durch die Beschreibung der Ausführungsformen oder die Darstellung in den Figuren beschränkt, sondern lediglich durch den Bereich der anhängenden Ansprüche definiert.

### Bezugszeichenliste:

- 1: Federelement
- 5: Manschette
- 7: Manschette
- 9: Verbindungssteg (Verbindungsstück)
- 11a, 11b: Vorsprung (keilförmig)
- 13: Aufnahmeraum
- 21: Mittelsteg
- 23: Sprossenartige Vorsprünge
- 25: Sprossenartige Vorsprünge an den Enden des Mittelstegs 21
- 27: Endfläche
- 29: Verbindungsklammer (Verbindungselement)
- 31: Wand
- 35: Verbindungswand
- 33: Kieferelement
- 37: Kieferelement
- 39: Wand
- 41: Schlitz
- 43: Schlitz
- 45a: Vorsprung
- 45b: Vorsprung
- 47a: Vorsprung
- 47b: Vorsprung
- 51: Trichter

## Patentansprüche

1. Federelement (1) mit
einem aus zwei Manschetten (5, 7) ausgebildeten Manschettenpaar, wobei
jede Manschette (5, 7) des Manschettenpaares aus einem geschlossenen Band ausgebildet ist, und
die zwei Manschetten (5, 7) mittels eines Verbindungsstücks (9) an jeweils einer Stelle ihres Umfangs einander gegenüberliegend miteinander verbunden sind,
wobei
an jeder Manschette (5, 7) von dem Verbindungsstück (9) beabstandet ein zu der gegenüberliegenden Manschette (7, 5) hin gerichteter Vorsprung (11a, 11b) vorgesehen ist, so dass zwischen den Manschetten (5, 7) ein durch das Verbindungsstück (9) und die Vorsprünge (11a, 11b) definierter Aufnahmeraum (13) ausgebildet ist,
**dadurch gekennzeichnet, dass**
jede Manschette (5, 7) einen angenähert elliptischen Querschnitt aufweist, der im Bereich des Verbindungsstücks (9) abgeflacht ist, und
jeder Vorsprung (11a, 11b) keilförmig ausgebildet ist, wodurch der Aufnahmeraum (13) einen angenähert rechteckigen Querschnitt aufweist.

2. Feder, mit
einem stabförmigen Mittelsteg (21), und
einem Federelement (1) nach Anspruch 1, wobei das Federelement (1) derart auf den Mittelsteg (21) aufgeschoben ist, dass ein Abschnitt des Mittelstegs (21) in dem Aufnahmeraum (13) des Federelements (1) aufgenommen ist und zerstörungsfrei aus dem Aufnahmeraum (13) des Federelements (1) entfernbar ist.

3. Feder nach Anspruch 2, wobei
der Aufnahmeraum (13) durch ein Zusammendrücken der beiden Manschetten (5, 7) an einem von dem Aufnahmeraum (13) abgewandten Abschnitt des Federelements (1) in dem Bereich der Vorsprünge (11a, 11b) aufgeweitet werden kann, wodurch das Federelement (1) auf den Mittelsteg (21) aufgeschoben oder davon abgenommen werden kann.

4. Feder nach Anspruch 2 oder 3, wobei der stabförmige Mittelsteg (21) einen rechteckigen Querschnitt aufweist.

5. Feder nach einem der Ansprüche 2 bis 4, wobei
der stabförmige Mittelsteg (21) entlang seiner Längsachse angeordnete, zueinander gleichmäßig beabstandete sprossenartige Vorsprünge aufweist, die bevorzugt paarweise ausgebildet sind, und
ein Abstand (d) zwischen den sprossenartigen Vorsprüngen einer Breite (b) des die Manschetten (5, 7) ausbildenden Bandes entspricht.

6. Feder nach Anspruch 5, wobei die sprossenartigen Vorsprünge paarweise ausgebildet sind, und zwischen benachbarten Paaren (23, 25) der sprossenartigen Vorsprünge der Abstand (d) vorliegt, und zwischen den einzelnen sprossenartigen Vorsprüngen eines Paares (23, 25) ein Paarabstand (c) vorliegt.

7. Feder nach einem der Ansprüche 4 bis 6, wobei an jedem Ende des stabförmigen Mittelstegs (21) ein sprossenartiger Vorsprung oder ein Paar (25) sprossenartige Vorsprünge so vorgesehen ist, dass an beiden Seiten des stabförmigen Mittelstegs (21) eine stufenfreie Endfläche (27) ausgebildet ist.

8. Feder nach Anspruch 7, wobei der stabförmige Mittelsteg (21) an einem seiner Enden mittels eines Verbindungselements (29) mit einem zweiten stabförmigen Mittelsteg (21) verbunden ist.

9. Feder nach Anspruch 8, wobei das Verbindungselement (29) zwei miteinander verbundene Kieferelemente (33, 37) aufweist, die durch ein Zusammendrücken an einem Ende an dem gegenüberliegenden Ende zur Aufnahme und Entnahme der Mittelstege (21, 21) aufweitbar sind.

10. Feder nach Anspruch 8 oder 9, wobei das Verbindungselement (29) zwei mit einem Schlitz (41, 43) versehene, einander gegenüberliegende Wände (31, 39) aufweist, zwischen denen in einem verbundenen Zustand die sprossenartigen Vorsprünge an der stufenfreien Endfläche (27) der beiden Mittelstege (21) aufgenommen sind, wobei jeweils einer der stabförmige Mittelstege (21) in einem der Schlitze (41, 43) aufgenommen ist.

11. Feder nach Anspruch 10, wobei eine Dicke der einander gegenüberliegende Wände (31, 39) dem Paarabstand (c) zwischen den einzelnen Sprossen des Paares (25) sprossenartige Vorsprünge an dem Ende des stabförmigen Mittelstegs (21) entspricht, und in dem verbundenen Zustand jede Wand (31, 39) des Verbindungselements (29) zwischen den einzelnen Sprossen des Paares (25) sprossenartige Vorsprünge liegt.

12. Feder nach einem der Ansprüche 10 oder 11, wobei an einem offenen Ende jedes Schlitzes (41, 43) mindestens ein Vorsprung (45a, 45b; 47a, 47b) vorgesehen ist, der den Schlitz (41, 43) in der Form des Querschnitts des Mittelstegs (21) begrenzt.

13. Feder nach einem der Ansprüche 2 bis 12, wobei
mehrere Manschettenpaare vorgesehen sind, die derart auf den Mittelsteg (21) aufgeschoben sind, dass der Mittelsteg (21) in den Aufnahmeräumen (13) der Manschettenpaare aufgenommen ist, sodass die Manschettenpaare parallel zueinander liegend entlang des Mittelstegs (21) angeordnet sind.

14. Matratze für Liege und/oder Sitzeinrichtungen mit
einem Matratzenkörper aus einem in sich bewegbaren Werkstoff, insbesondere aus Schaumstoff oder Latex, mit quer zu einer Längsachse oder Breitenachse angeordneten Hohlräumen, wobei in mindestens einem Hohlraum eine Feder nach einem der Ansprüche 2 bis 13 vorgesehen ist.

## Claims

1. Spring element (1) with
a sleeve pair formed of two sleeves (5, 7), wherein
each sleeve (5, 7) of the sleeve pair is formed of a closed band, and
the two sleeves (5, 7) are connected to one another in a mutually opposite manner by means of a connecting piece (9) at a respective point of their periphery,
wherein
on each sleeve (5, 7) a projection (11a, 11b) is provided, which is directed towards the opposite sleeve (7, 5) and spaced apart from the connecting piece (9), such that between the sleeves (5, 7) a receiving space (13) defined by the connecting piece (9) and the projections (11a, 11b) is formed,
**characterized in that**
each sleeve (5, 7) has an approximately elliptical cross section which is flattened in the region of the connecting piece (9), and
each projection (11a, 11b) is of a wedge-like form, as a result of which the receiving space (13) has an approximately rectangular cross section.

2. Spring with
a rod-shaped middle web (21) and
a spring element (1) according to Claim 1, wherein the spring element (1) is pushed onto the middle web (21) in such a manner that a portion of the middle web (21) is received in the receiving space (13) of the spring element (1) and can be removed nondestructively from the receiving space (13) of the spring element (1).

3. Spring according to Claim 2, wherein
the receiving space (13) can be widened in the region of the projections (11a, 11b) by pressing together the two sleeves (5, 7) at a portion of the spring element (1) that faces away from the receiving space (13), as a result of which the spring element (1) can be pushed onto or taken off from the middle web (21).

4. Spring according to Claim 2 or 3, wherein the rod-shaped middle web (21) has a rectangular cross section.

5. Spring according to one of Claims 2 to 4, wherein
the rod-shaped middle web (21) has rung-like projections arranged along its longitudinal axis uniformly spaced apart from one another and preferably formed in pairs, and
a spacing (d) between the rung-like projections corresponds to a width (b) of the band forming the sleeves (5, 7).

6. Spring according to Claim 5, wherein the rung-like projections are formed in pairs, and between adjacent pairs (23, 25) of the rung-like projections is the spacing (d), and between the individual rung-like projections of a pair (23, 25) is a pair spacing (c).

7. Spring according to one of Claims 4 to 6, wherein a rung-like projection or a pair (25) of rung-like projections is provided at each end of the rod-shaped middle web (21) such that a step-free end face (27) is formed at both sides of the rod-shaped middle web (21).

8. Spring according to Claim 7, wherein the rod-shaped middle web (21) is connected at one of its ends to a second rod-shaped middle web (21) by means of a connecting element (29).

9. Spring according to Claim 8, wherein the connecting element (29) has two jaw elements (33, 37) connected to one another which, by being pressed together at one end, can be widened at the opposite end for the purposes of receiving and removing the middle webs (21, 21).

10. Spring according to Claim 8 or 9, wherein the connecting element (29) has two mutually opposite walls (31, 39) provided with a slit (41, 43) and between which, in a connected state, are received the rung-like projections at the step-free end face (27) of the two middle webs (21), wherein one of the rod-shaped middle webs (21) is respectively received in one of the slits (41, 43).

11. Spring according to Claim 10, wherein a thickness of the mutually opposite walls (31, 39) corresponds to the pair spacing (c) between the individual rungs of the pair (25) of rung-like projections at the end of the rod-shaped middle web (21), and, in the connected state, each wall (31, 39) of the connecting element (29) lies between the individual rungs of the pair (25) of rung-like projections.

12. Spring according to either of Claims 10 and 11, wherein at an open end of each slit (41, 43) at least one projection (45a, 45b; 47a, 47b) is provided, which delimits the slit (41, 43) in the form of the cross section of the middle web (21).

13. Spring according to one of Claims 2 to 12, wherein
a plurality of sleeve pairs are provided, which are pushed onto the middle web (21) in such a manner that the middle web (21) is received in the receiving spaces (13) of the sleeve pairs, so that the sleeve pairs are arranged lying parallel to one another along the middle web (21).

14. Mattress for couches and/or seat devices, with
a mattress body of a material that is in itself movable, in particular of foam or latex, with cavities arranged transversely to a longitudinal axis or width axis, wherein in at least one cavity a spring according to one of Claims 2 to 13 is provided.

## Revendications

1. Elément de ressort (1), comprenant une paire de manchettes réalisée à partir de deux manchettes (5, 7), chaque manchette (5, 7) de la paire de manchettes étant réalisée à partir d'une bande fermée, et
les deux manchettes (5, 7) étant connectées l'une à l'autre en face l'une de l'autre au moyen d'une pièce de connexion (9) au niveau d'un endroit respectif de leur périphérie,
une saillie (11a, 11b) orientée vers la manchette opposée (7, 5) étant réalisée sur chaque manchette (5, 7) à distance de la pièce de connexion (9), de telle sorte qu'entre les manchettes (5, 7) soit réalisé un espace de réception (13) défini par la pièce de connexion (9) et les saillies (11a, 11b),
**caractérisé en ce que**
chaque manchette (5, 7) présente une section transversale approximativement elliptique qui est aplatie dans la région de la pièce de connexion (9), et
chaque saillie (11a, 11b) est réalisée en forme de clavette, de sorte que l'espace de réception (13) présente une section transversale approximativement rectangulaire.

2. Ressort, comprenant
une âme centrale en forme de barre (21), et
un élément de ressort (1) selon la revendication 1, l'élément de ressort (1) étant poussé sur l'âme centrale (21) de telle sorte qu'une portion de l'âme centrale (21) soit reçue dans l'espace de réception (13) de l'élément de ressort (1) et puisse être enlevée sans destruction de l'espace de réception (13) de l'élément de ressort (1).

3. Ressort selon la revendication 2, dans lequel l'espace de réception (13) peut être élargi par compression des deux manchettes (5, 7) au niveau d'une portion de l'élément de ressort (1) opposée à l'espace de réception (13) dans la région des saillies (11a, 11b), de sorte que l'élément de ressort (1) puisse être poussé sur l'âme centrale (21) ou être enlevé de celle-ci.

4. Ressort selon la revendication 2 ou 3, dans lequel l'âme centrale en forme de barre (21) présente une section transversale rectangulaire.

5. Ressort selon l'une quelconque des revendications 2 à 4, dans lequel
l'âme centrale en forme de barre (21) présente des saillies en forme d'échelons espacées uniformément les unes des autres, disposées le long de son axe longitudinal, qui sont de préférence réalisées par paires, et
une distance (d) entre les saillies en forme d'échelons correspond à une largeur (b) de la bande constituant les manchettes (5, 7).

6. Ressort selon la revendication 5, dans lequel les saillies en forme d'échelons sont réalisées par paires, et entre des paires adjacentes (23, 25) des saillies en forme d'échelons existe la distance (d) et entre les saillies individuelles en forme d'échelons d'une paire (23, 25) existe une distance intérieure à la paire (c).

7. Ressort selon l'une quelconque des revendications 4 à 6, dans lequel, à chaque extrémité de l'âme centrale en forme de barre (21), est prévue une saillie en forme d'échelon ou une paire (25) de saillies en forme d'échelons de telle sorte qu'une surface d'extrémité sans échelons (27) soit réalisée des deux côtés de l'âme centrale en forme de barre (21).

8. Ressort selon la revendication 7, dans lequel l'âme centrale en forme de barre (21) est connectée au niveau de l'une de ses extrémités à une deuxième âme centrale en forme de barre (21) au moyen d'un élément de connexion (29).

9. Ressort selon la revendication 8, dans lequel l'élément de connexion (29) présente deux éléments de mâchoire connectés l'un à l'autre (33, 37) qui, par compression à une extrémité, peuvent être écartés à l'extrémité opposée pour recevoir et enlever les âmes centrales (21, 21).

10. Ressort selon la revendication 8 ou 9, dans lequel l'élément de connexion (29) présente deux parois mutuellement opposées (31, 39) pourvues d'une fente (41, 43), entre lesquelles, dans un état connecté, sont reçues les saillies en forme d'échelons au niveau de la surface d'extrémité sans échelons (27) des deux âmes centrales (21), à chaque fois l'une des âmes centrales en forme de barre (21) étant reçue dans l'une des fentes (41, 43) .

11. Ressort selon la revendication 10, dans lequel une épaisseur des parois mutuellement opposées (31, 39) correspond à la distance intérieure à la paire (c) entre les échelons individuels de la paire (25) de saillies en forme d'échelons à l'extrémité de l'âme centrale en forme de barre (21), et dans l'état connecté, chaque paroi (31, 39) de l'élément de connexion (29) est située entre les échelons individuels de la paire (25) de saillies en forme d'échelons.

12. Ressort selon l'une quelconque des revendications 10 et 11, dans lequel, à une extrémité ouverte de chaque fente (41, 43) est prévue au moins une saillie (45a, 45b ; 47a, 47b) qui limite la fente (41, 43) à la forme en section transversale de l'âme centrale (21).

13. Ressort selon l'une quelconque des revendications 2 à 11, dans lequel
plusieurs paires de manchettes sont prévues, lesquelles sont poussées sur l'âme centrale (21) de telle sorte que l'âme centrale (21) soit reçue dans les espaces de réception (13) des paires de manchettes, de telle sorte que les paires de manchettes soient disposées parallèlement les unes aux autres le long de l'âme centrale (21).

14. Matelas de couchage et/ou de systèmes de sièges comprenant un corps de matelas constitué d'un matériau mobile en soi, en particulier de mousse ou de latex, avec des cavités disposées transversalement à un axe longitudinal ou à un axe en largeur, un ressort selon l'une quelconque des revendications 2 à 13 étant prévu dans au moins une cavité.
